# EUROPEAN PATENT APPLICATION

(11) **EP 0 933 470 A2**
(43) Date of publication of application: **04.08.1999**
(21) Application number: 99300799.6
(22) Date of filing: 03.02.1999
(51) Int. Cl.: D21F 1/66

(54) **Dewatering concentrator**

(30) Priority: 03.02.1998 JP 2200998
(71) Applicant: ISHIKAWAJIMA-HARIMA JUKOGYO KABUSHIKI KAISHA, Chiyoda-ku Tokyo-to (JP); ISHIKAWAJIMA SANGYO KIKAI KABUSHIKI KAISHA, Tokyo-to (JP)
(72) Inventor: Iwashige, Naoyuki, Kooriyama-shi, Fukushima-ken (JP)
(74) Representative: Jennings, Nigel Robin

(57) **Abstract**

A dewatering concentrator comprises a strainer (2) including an elongate hollow screen (7) of circular cross-section which is rotatable about its axis and has a closed end and an open end, which constitutes an outlet (15). A hollow pipe (3), which is rotatable about its length at a speed different to that of the screen (7), extends axially within the screen (7) and has openings (11) adjacent the closed end for admitting stock into the interior of the screen (7). The hollow pipe (3) carries a plurality of paddles (12) whose free ends extend to close to the screen (7) and which are shaped to cause the stock to move within the screen towards the outlet (15).

## Description

The present invention relates to a dewatering concentrator for concentrating waste paper pulp slurry, that is to say separating waste paper pulp slurry or other industrial waste slurry into moisture and solid components or into a moisture component and concentrated stock.

In the paper pulp industry, it is often desired to concentrate pulp stock of low concentration to a higher concentration. When paper pulp stock is to be concentrated to a concentration of, for example, 30% (moisture content 70%) or more by a screw thickener, the stock to be processed must have a concentration of for example, 2.5% or more so that the stock suspension has a relatively low fluidity. This is because paper pulp stock generally has strong water-retaining properties and requires a high pressure to be applied in order to be concentrated to a concentration of, for example, 30% or more. The application of high pressure to a stock suspension of high fluidity would fail since such a stock suspension can escape through even a minute gap.

On the other hand, even a strainer with relatively large pores can apply a high pressure to a stock suspension and readily concentrate it to a higher concentration provided that the stock suspension to be processed is pre-concentrated to have a low fluidity since pulp fibres can form a very dense and compact mat on the surface of the strainer. Several types of known apparatus utilise this principle, including a screw thickener as described above.

Centrifugal separators utilising centrifugal force, are a known type of dewatering concentrator. This type of concentrator applies a high centrifugal force to a suspension containing solid components to remove moisture or water components through a strainer. The resultant dewatered stock is discharged by a screw which scrapes the stock off the inner surface of the strainer.

The screw thickener mentioned above can not achieve sufficient dewatering unless the stock to be processed has a concentration of, for example, 2.5% or more. Moreover, solid components tend to mix into the stock solution after squeezing since the strainer cannot be provided with pores with a diameter smaller than a predetermined value, e.g. 2 mm in diameter. In the case of centrifugal separators, the drive for the separator must be very robust since a sufficient dewatering effect cannot be attained unless the centrifugal force applied to the stock is 1000 G or more. Moreover, during the dewatering process the fibres of the pulp stock tend to become entangled with each other to form a thick stock mat which may rotate together with the screw, resulting in failure of smooth discharge of the dewatered stock.

It is the object of the present invention to provide a dewatering concentrator which is compact and which can concentrate and dewater even stock of low concentration.

According to the present invention, the above object is solved by a dewatering concentrator as claimed in Claims 1 and 4. Further preferred features are set forth in the dependent claims.

The axial shaft within the screen is thus connected, in use, to drive means arranged to rotate it about its length and the screen is also connected, in use, to drive means arranged to rotate it about its axis at a different speed. Thus, in use, the screen and the shaft rotate at different speeds. The paddles carried by the shaft extend to close to the screen, that is to say to within about 0.1 to 5.0 mm, and thus scrape off the stock mat which tends to form on the internal surface of the screen. The paddles are preferably so constructed that they impart an axial force to the stock within the screen to move it in the direction towards the outlet. The paddles are preferably so constructed that the speed of movement of the stock decreases along the length of the screen in the direction towards the outlet.

Further features of the invention will be apparent from the following description of three exemplary embodiments which is given with reference to the attached drawings, in which:

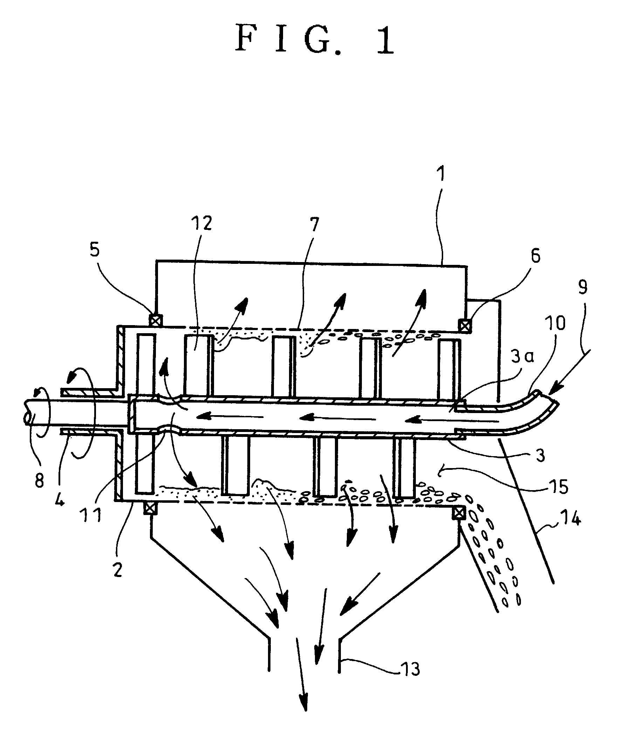

Figures 1, 2 and 3 are schematic axial sectional views of first, second and third embodiments of the invention, respectively.

Figure 1 shows a dewatering separator which comprises a casing 1, a hollow cylindrical strainer 2 which is supported at two axially spaced positions for rotation in the casing 1, and a hollow pipe 3, which is mounted in the strainer 2 for rotation at a speed different to that of the strainer 2.

The strainer 2 has a closed end integral with a hollow outer shaft 4. The other end of the strainer 2 is open and constitutes an outlet 15. The strainer 2 is supported on the casing 1 by a bearing 5 near the closed end of the strainer 2 and by a bearing 6 at the open end of the strainer 2. The strainer 2 has, at its outer periphery, a screen 7 with pores or slits of a size which are appropriate to the properties of the stock to be concentrated and/or the quality of the liquid after squeezing.

The hollow pipe 3 has a closed end adjacent the closed end of the strainer 2 integral with an inner shaft 8 which extends through the outer shaft 4. The other end of the hollow pipe 3 is open to provide an opening 3a to which a slurry inlet 10 is rotatably connected for the introduction of the slurry 9. The hollow pipe 3 further has radial slurry outlets 11 adjacent its closed end for discharging the slurry 9 outwardly into the interior of the strainer 2. The hollow pipe 3 has a plurality of axially spaced plate-like paddles 12 mounted on the outer periphery of the pipe 3 whose length is such that there is a gap of about 0.1-5.0 mm between the tips of the paddles 12 and the inner surface of the screen 7. The paddles 12 are tilted or inclined to the axis of the pipe 3 so as to move the stock from the closed end of the strainer 2 toward the outlet 15 (i.e. from left to right in Figure 1).

The maximum tilt angle of the paddles 12 to the axis of the pipe 3 is 90 degrees, at which angle the paddles cannot move the stock at all in the axial direction. At the upstream end of the strainer just after the position at which the slurry 9 enters into the interior of the strainer through the outlets 11, when the slurry has a high moisture content (i.e. in the initial stage of the dewatering process), the paddles 12 are arranged to have small or acute tilt angles to the axis of the pipe 3 so as to move the slurry 9 rapidly in the axial direction and to prevent thick stock mat from being formed on the inner surface of the screen 7. Towards the right-hand side of Figure 1, i.e. in the later stages of the dewatering process, the paddles 12 are arranged to have progressively increasing tilt angles closer to 90 degrees so that the axial velocity of the slurry gradually decreases as its moisture content decreases. The paddles 12 serve to maintain the pores or slits of the screen 7 clear and to pulverise the sheet-like stock mat which forms on the screen 7.

The casing 1 is integrally formed at its lower end with a tapered water discharge duct 13 so that water or moisture components produced as the result of dewatering through the screen 7, i.e. water components passing through the screen 7, are collected together and discharged to the exterior. The casing 1 is also integrally formed with a stock outlet 14 which communicates with the outlet 15 to discharge solid material or concentrated stock, after dewatering.

Although not shown in the figure, the hollow pipe 3 and the inner shaft 8 are supported on the casing 1 or the strainer 2 by bearings.

The mode of operation of the concentrator shown in Figure 1 is as follows:

The slurry 9 to be dewatered is introduced through the slurry inlet 10 into the hollow pipe 3 and is discharged through the slurry outlets 11 in the hollow pipe 3 into the interior of the strainer 2 which is rotated via the outer shaft 4 by an external drive (not shown) to rotate the slurry and thus apply centrifugal force to it. As a result, the slurry 9 is pressed against the inner surface of the screen 7 and is dewatered.

In the initial stage of the dewatering process the slurry 9 has the highest water content. If the moisture is removed quickly in this stage, the fluidity of the slurry might be lost, resulting in the formation of a thick, cylindrical stock mat on the screen 7. Such a thick stock mat would rotate in unison with the paddles 12 around the inner surface of the screen 7, leading to inadequate dewatering and of discharge of the stock mat. In order to overcome this problem, according to the invention, the stock mat is gradually scraped off in the form of flakes and is fluidised by the tips of the paddles 12 before the mat becomes thick.

More specifically, immediately after the slurry 19 is supplied through the slurry outlets 11 to the interior of the strainer 2 in the initial stage of the dewatering process, the slurry 9 has a high moisture content and has a certain fluidity. In this stage, the slurry 9 is quickly moved downstream by the paddles 12 with the smaller tilt angles so that a thick stock mat can not form on the inner surface of the strainer 2 and dewatering by centrifugal force can be effected to the full extent.

As the dewatering process proceeds, the slurry 9 is moved by the paddles 12 toward the outlet 15. In the later stages of the process, the moisture content of the slurry is reduced and its fluidity is also reduced. The sheet-like stock mat formed on the inner surface of the screen 7 is scraped off by the paddles 12 into flakes before the mat becomes thick. Fragmentation into flakes will contribute to an increase in fluidity, resulting in an increase of mobility. The tilt angles of the paddles 12 progressively increase in the downstream direction to reduce the speed of movement of the slurry. As a result, the flake-like solid material is dewatered to the maximum extent and then discharged through the stock outlet 14.

In general, it is relatively easy to dewater slurry of relatively high moisture content to some extent whereas further dewatering of the slurry becomes progressively more difficult. This problem is overcome by the invention.

During the initial stage of dewatering, the slurry 9 is moved at a relatively high velocity by the paddles 12 installed at relatively small tilt angles so that a thick stock mat is prevented from being formed. In the later stages of the dewatering process, the slurry 9 is slowly dewatered whilst being moved at a slower velocity by the paddles 12 installed at larger tilt angles and the stock mat which is formed is scraped off by the paddles 12 into flakes and is fluidised. As a result, effective dewatering can be carried out over the entire area of the strainer 2.

The slurry 9 is thus dewatered into concentrated form or solid material, and is discharged to the exterior through the stock outlet 14. The moisture or water components obtained as a result of the dewatering are discharged through the moisture discharge duct 13.

When pulp slurry of low concentration and high fluidity is to be concentrated to a higher concentration (e.g. to 30% concentration of solid material), a screw thickener is not suitable, as described above, and centrifugal force must be utilised. However, utilisation of a conventional centrifugal separator would result in a large installation since such centrifugal separators can process only relatively small quantities of liquid.

In contrast, according to the present invention, a thin stock mat is formed on the inner surface of the screen 7 in the initial stage of dewatering and dewatering is effectively performed. Further, the stock mat is pulverised to flakes by the paddles 12 in the later stages of the dewatering process and is moved slowly. Thus, the dewatered stock is not rotated in unison with the paddles 12 and is discharged smoothly. There is no need to reduce the thickness of the entire stock mat. As a result, the dewatering efficiency per unit area of the strainer 2 is increased, which contributes to making the apparatus very compact. Also, the hollow pipe 3 serves to introduce the stock to be dewatered (slurry 9) into the strainer 2 and to rotate the paddles 12, which represents a further simplification and further reduction in size of the apparatus.

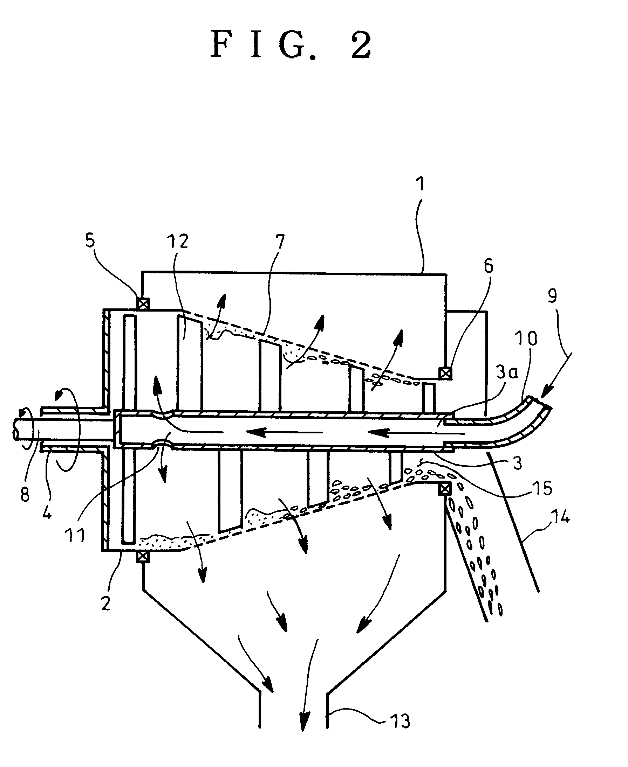

Figure 2 shows a second embodiment of the invention which is similar to the first embodiment shown in Figure 1 except that the strainer 2 is frustoconical and converges toward the open end 15 (in the direction of movement of the stock) and that the paddles 12 are of different length matching the shape of the strainer 2.

When the diameter of the strainer 2 gradually reduces toward the outlet 15, it is more difficult to discharge the stock or concentrated slurry after dehydration. Compared with the first embodiment shown in Figure 1, the slurry tends to stay longer in the strainer 2, which results in additional positive dewatering. This apparatus is therefore suitable for efficient dewatering of slurry of a type which is more difficult to dewater.

In this case, if the speed of rotation of the inner shaft 8 is less than that of the outer shaft 4, i.e. if the speed of rotation of the paddles 12 is lower than that of the strainer 2, the slurry 9 is moved by the paddles 12 and dewatering by the rotating strainer 2 is enhanced to a maximum level.

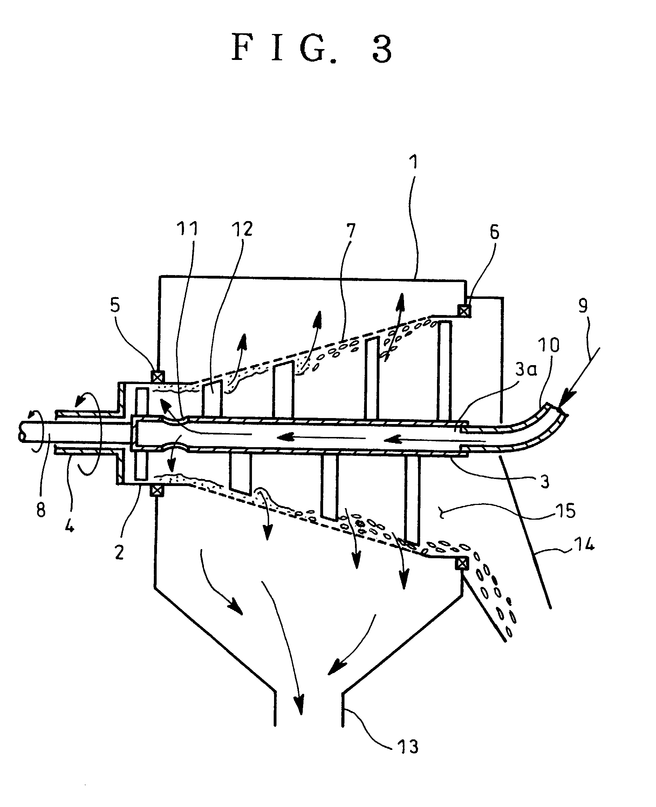

Figure 3 shows a third embodiment of the invention in which the strainer 2 is again frustoconical but divergent towards the outlet 15. With this construction it is easier to discharge the stock or concentrated slurry after dewatering.

Therefore, this apparatus is suitable for rapid dewatering of slurry of a type which can be easily dewatered.

In this case, if the speed of rotation of the inner shaft 8 is higher than that of the outer shaft 4, i.e. if the speed of rotation of the paddles 12 is made higher than that of the strainer 2, the speed of movement of the slurry toward the outlet 15 is accelerated.

All the embodiments described above have the following advantages:
(1) Stock of low concentration (e.g. less than 2.5%) may be concentrated and dewatered to a concentration of, for example, more than 30%.
(2) The screen 7 of the strainer 2 may have smaller pores or slits than in known apparatus, which contributes to preventing solid material from moving into the liquid component after squeezing of the slurry.
(3) Dewatering can be carried out in a stable manner, even when the stock is not supplied at a constant rate.
(4) The apparatus is compact.

Although the present invention is primarily intended for the removal of water from stock or the like, it will be appreciated that it could equally remove any liquid and the term "dewatering" is to be interpreted accordingly.

## Claims

1. A dewatering concentrator comprising a hollow strainer (2) rotatably supported on a casing (1) and having a closed end and an open end, which constitutes an outlet (15), the strainer (2) having a screen (7) on its outer periphery, and paddles (12), which are rotatably arranged in the strainer (2) and arranged to be rotated at a speed different to that of the strainer, for moving stock introduced into the strainer for dewatering toward the outlet (15).

2. A concentrator as claimed in Claim 1 further comprising a hollow pipe (3) in the strainer (2) arranged to be rotated at a speed different to that of the strainer for introducing stock to be dewatered into the interior of the strainer (2) at a position adjacent to the closed end of the hollow pipe (3), the paddles (12) being arranged on the outer periphery of the hollow pipe (3) and spaced from one another along the length of the pipe (3), the tip of each paddle extending to a position close to the screen (7).

3. A concentrator as claimed in Claim 1 or 2 wherein the paddles (12) are tilted such that the speed of the stock to be dewatered, which is moved by the paddles, is relatively high in the initial stage of the dewatering process and relatively lower in the later stages of the dewatering process.

4. A dewatering concentrator comprising an elongate hollow screen (7) of substantially circular cross-section which is rotatable about its axis and has a closed end and an open end, which constitutes an outlet (15), an inlet (11) for stock or the like to be dewatered adjacent the closed end, a shaft (3) extending axially within the screen (7), the shaft (3) being rotatable about its length at a speed different to that of the screen (7), the shaft (3) carrying a plurality of paddles (12) whose free ends extend to close to the screen (7).

5. A concentrator as claimed in Claim 4 in which the shaft (3) is hollow and constitutes an inlet pipe for the stock or the like, the shaft (3) having one or more openings (11) in it adjacent the closed end of the screen constituting the inlet.

6. A concentrator as claimed in Claim 4 or 5 in which the paddles are inclined to the length of the shaft (3) and thus, in use, cause the stock or the like to move from the inlet (11) towards the outlet (5).

7. A concentrator as claimed in Claim 6 in which the angle of inclination of the paddles to the length of the shaft (3) varies progressively along the length of the shaft (3) such that, in use, the speed of movement of the stock or the like decreases along the length of the screen (7) in the direction of the outlet (15).

8. A concentrator as claimed in any one of the preceding claims in which the screen (7) is cylindrical.

9. A concentrator as claimed in any one of Claims 1 to 7 in which the screen (7) is frustoconical and convergent in the direction towards the outlet (15).

10. A concentrator as claimed in any one of Claims 1 to 7, in which the screen (7) is frustoconical and divergent in the direction towards the outlet (15).
